# EUROPEAN PATENT APPLICATION

(11) **EP 4 080 971 A1**
(43) Date of publication of application: **26.10.2022**
(21) Application number: 19958732.0
(22) Date of filing: 30.12.2019
(51) Int. Cl.: H04W 72/12, H04W 4/06

(54) **SERVICE SCHEDULING METHOD AND APPARATUS, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: WANG, Shukun, Dongguan, Guangdong 523860 (CN)
(74) Representative: RGTH
(86) International application number: PCT/CN2019/130145
(87) International publication number: WO 2021/134316

(57) **Abstract**

Embodiments of the present application provide a service scheduling method and apparatus, a terminal device, and a network device. The method comprises: a terminal device transmits first indication information and/or first capability information to a network device, wherein the first indication information is used for indicating the service information of an MBMS service, and the first capability information is used for indicating a receiving capability of the terminal device for the MBMS service and/or a unicast service; and according to the first indication information and/or the first capability information, the unicast service and/or the MBMS service are/is scheduled for the terminal device.

## Description

### TECHNICAL FIELD

The embodiments of the present disclosure relate to the technical field of mobile communication, in particular to a method and an apparatus for scheduling service, a terminal device and a network device.

### BACKGROUND

Multimedia Broadcast Multicast Service (MBMS) is a technology that transmits data from one data source to multiple users by sharing network resources. With the technology, network resources can be used effectively when providing multimedia service, and the broadcast and multicast of multimedia service with high rate (such as 256 kbps) is implemented.

In the New Radio (NR) system, many scenarios need to support the service requirements of multicast and broadcast, such as Internet of vehicles and industrial Internet. Therefore, it is necessary to introduce MBMS into NR. For the terminal device in the connected state, there is the requirement to receive the unicast service when receiving the MBMS service, so how to coordinate the reception of unicast service and the reception of MBMS service is a problem to be solved.

### SUMMARY

The embodiments of the present disclosure provide a method and an apparatus for scheduling service, a terminal device and a network device.

The method for scheduling service provided in the embodiments of the present disclosure comprises the following operations.

The terminal device transmits first indication information and/or first capacity information to a network device. The first indication information is configured to indicate service information of Multimedia Broadcast Multicast Service (MBMS) service, and first capacity information is configured to indicate a receiving capacity of the terminal device for a MBMS service and/or a unicast service.

The unicast service and/or MBMS service is scheduled for the terminal device based on the first indication information and/or the first capacity information.

The method for scheduling service provided in the embodiments of the present disclosure comprises the following operations.

A network device receives first indication information and/or first capacity information from a terminal device. The first indication information is configured to indicate service information of Multimedia Broadcast Multicast Service (MBMS) service, and first capacity information is configured to indicate a receiving capacity of the terminal device for a MBMS service and/or a unicast service.

The network device schedules the unicast service and/or MBMS service for the terminal device based on the first indication information and/or the first capacity information.

The apparatus for scheduling service provided in the embodiments of the present disclosure is applicable for a terminal device and comprises a transmitting unit.

The transmitting unit is configured to transmit first indication information and/or first capacity information to a network device. The first indication information is configured to indicate service information of Multimedia Broadcast Multicast Service (MBMS) service, and first capacity information is configured to indicate a receiving capacity of the terminal device for a MBMS service and/or a unicast service.

The unicast service and/or MBMS service is scheduled for the terminal device based on the first indication information and/or the first capacity information.

The apparatus for scheduling service provided in the embodiments of the present disclosure is applicable for a network device and comprises a receiving unit and a scheduling unit.

The receiving unit is configured to receive first indication information and/or first capacity information from a terminal device, wherein the first indication information is configured to indicate service information of Multimedia Broadcast Multicast Service (MBMS) service, and first capacity information is configured to indicate a receiving capacity of the terminal device for a MBMS service and/or a unicast service.

The scheduling unit is configured to schedule the unicast service and/or MBMS service for the terminal device based on the first indication information and/or the first capacity information.

The terminal device provided in the embodiments of the present disclosure comprises a processor and a memory. The memory is configured to store a computer program, and the processor is configured to call and execute the computer program stored in the memory to perform above method for scheduling service.

The network device provided in the embodiments of the present disclosure comprises a processor and a memory. The memory is configured to store a computer program, and the processor is configured to call and execute the computer program stored in the memory to perform above method for scheduling service.

The chip provided in the embodiments of the present disclosure is configured to implement above methods for scheduling service.

Specifically, the chip comprises a processor configured to call and execute a computer program in a memory to enable a device on which the chip is mounted to perform above methods for scheduling service.

The computer readable storage medium provided in the embodiments of the present disclosure is configured to store a computer program. The computer program enables a computer to perform above methods for scheduling service.

The computer program product provided in the embodiments of the present disclosure comprises computer program instructions. The computer program instructions enable a computer to perform above methods for scheduling service.

The computer program provided in the embodiments of the present disclosure enables the computer to perform the above methods for scheduling service when it is running on the computer.

According to the above technical solutions, the terminal device transmits the assistance information (i.e. the first indication information and/or the first capability information) to the network device to assist the network device in scheduling unicast service, so that the NR system supports the coordinated reception of the MBMS service and the unicast service, thereby the reception of unicast service and the reception of MBMS service do not conflict with each other, or the reception of scheduling information of unicast service and the reception of scheduling information of MBMS service do not conflict with each other, and the capability requirement of terminal device is satisfied.

### BRIEF DESCRIPTION OF DRAWINGS

The drawings described herein are used to provide a further understanding of the present disclosure and form a part of the present disclosure. The schematic embodiments of the present disclosure and their descriptions are used to explain the present disclosure and do not constitute an improper limitation of the present disclosure.
Fig. 1 is a schematic diagram of the communication system architecture provided by the embodiments of the present disclosure.
Fig. 2 is a schematic diagram of the first SIB related configuration provided by the embodiments of the present disclosure.
Fig. 3 is a schematic diagram of the PTM configuration transmission mechanism provided by the embodiments of the present disclosure.
Fig. 4 is a PTM channel and its mapping diagram provided by the embodiments of the present disclosure.
Fig. 5 is a flow diagram of the method for scheduling service provided by the embodiments of the present disclosure.
Fig. 6 is the first structural composition diagram of the apparatus for scheduling service provided by the embodiments of the present disclosure.
Fig. 7 is the second structural composition diagram of the apparatus for scheduling service provided by the embodiments of the present disclosure.
Fig. 8 is a schematic structure diagram of a communication device provided by the embodiments of the present disclosure.
Fig. 9 is a schematic structural diagram of a chip according to the embodiments of the present disclosure.
Fig. 10 is a schematic block diagram of a communication system provided by the embodiments of the present disclosure.

### DETAILED DESCRIPTION

The technical solutions in the embodiments of the present disclosure will be described below in combination with the accompanying drawings in the embodiments of the present disclosure. Obviously, the described embodiments are part embodiments of the present disclosure, but not all embodiments. Based on the embodiments in the present disclosure, all other embodiments obtained by ordinary technicians in the art without inventive work belong to the scope of protection of the present disclosure.

The technical solutions of the embodiment of the present disclosure can be applied to various communication systems, such as long term evolution (LTE) system, LTE Frequency Division Duplex (FDD) system, LTE Time Division Duplex (TDD), system, 5G communication system or future communication system.

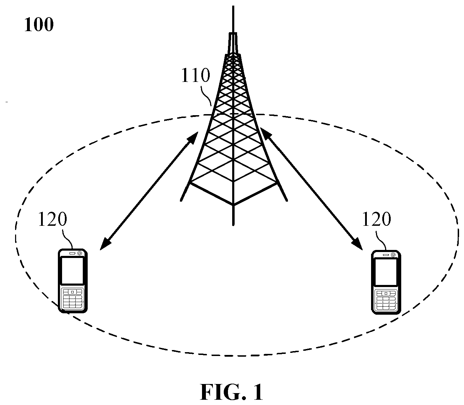

Exemplarily, the communication system 100 applied by the embodiments of the present disclosure is shown in Fig. 1. The communication system 100 may include a network device 110, which may be a device that communicates with the terminal 120 (or named communication terminal, terminal). The network device 110 may provide communication coverage for a specific geographical area and may communicate with terminals located within the coverage area. Alternatively, the network device 110 may be an Evolutional Node B (ENB or eNodeB) in the LTE system, or a wireless controller in the Cloud Radio Access Network (CRAN), or the network device may be a mobile switching center, relay station, access point, on-board device, wearable device, hub, switch, bridge, router, network side device in 5G network or network device in future communication system, etc.

The communication system 100 also includes at least one terminal 120 located within the coverage area of the network device 110. The "terminal" used herein includes, but is not limited to, the devices connected via a wired line, such as Public Switched Telephone networks (PSTN), Digital Subscriber Line (DSL), digital cable and direct cable, and/or via another data connection/network, and/or via a wireless interface, such as a cellular network, a Wireless Local Area Network (WLAN), a digital television network such as a DVB-H network, a satellite network, and an AM-FM broadcast transmitter, and/or a device of another terminal configured to receive/transmit a communication signal, and/or an Internet of Things (IOT) device. A terminal configured to communicate through a wireless interface may be referred to as a "wireless communication terminal", "wireless terminal" or "mobile terminal". Examples of mobile terminals include, but are not limited to, satellite or cellular phones, a Personal Communications System (PCS) terminal that can combine cellular radiotelephone with data processing, fax and data communication capabilities, a Personal Digital Assistant (PDA) that can include radiophones, pagers, Internet/intranet access, web browsers, notebooks, calendars, and/or Global Positioning System (GPS) receivers, and conventional laptop and/or handheld receivers or other electronic devices including radiotelephone transceivers. A terminal may refer to an access terminal, user equipment (UE), user unit, user station, mobile station, mobile station, remote station, remote terminal, mobile device, user terminal, terminal, wireless communication device, user agent or user device. The access terminal may be a cellular telephone, a cordless telephone, a Session Initiation Protocol (SIP) telephone, a Wireless Local Loop (WLL) station, a PDA, a handheld device with wireless communication function, a computing device or other processing device connected to a wireless modem, an on-board device, a wearable device, a terminal in a 5G network or a terminal in a PLMN in further Evolution.

Alternatively, Device to Device (D2D) communication may be performed between terminals 120.

Alternatively, the 5G communication system or 5G network may also be referred to as a New Radio (NR) system or NR network.

FIG. 1 exemplarily shows a network device and two terminals. Alternatively, the communication system 100 may include a plurality of network devices, and the coverage area of each network device may include other numbers of terminals, which is not limited by the embodiments of the present disclosure.

Alternatively, the communication system 100 may also include other network entities such as a network controller and a mobile management entity, which is not limited by the embodiments of the present disclosure.

It should be understood that, in the embodiments of the present disclosure, a device with a communication function in the network/system may be referred to as a communication device. Taking the communication system 100 shown in FIG. 1 as an example, the communication devices may include a network device 110 and a terminal 120 that have a communication function, and the network device 110 and the terminal 120 may be the specific devices described above, which will not be repeated here. The communication devices may further include other devices in the communication system 100, such as other network entities such as a network controller and a mobility management entity, which are not limited in this embodiment of the present application.

It should be understood that the terms "system" and "network" are often used interchangeably herein. The term "and/or" in the present disclosure is only an association relationship to describe the associated objects, and represents that there can be three kinds of relationships, for example, A and/or B can represents three kinds of cases, i.e., A exists alone, A and B exist at the same time, and B exists alone. In addition, the character "/" in the present disclosure generally represents that there is an "or" relationship between the associated objects before and after.

For the convenience of understanding the technical solutions of the embodiments of the present disclosure, the technical solutions related to the embodiments of the present disclosure are described below.

With the pursuit of speed, delay, high-speed mobility, energy efficiency, and the diversity and complexity of service in future life, the 3rd Generation Partnership Project (3GPP) international standards organization began to develop 5G. The main application scenarios of 5G are: Enhanced Mobile Broadband (eMBB), Ultra-Reliable Low-Latency Communications (URLLC), and massive Machine-Type Communications (mMTC)).

On the one hand, eMBB still aims at obtaining multimedia content, services and data for user, and its requirement is growing rapidly. On the other hand, since eMBB may be deployed in different scenarios, such as indoors, urban areas, rural areas, etc., capability and requirement thereof are also quite different, so it cannot be generalized and must be analyzed in detail in combination with specific deployment scenarios. Typical applications of URLLC include: industrial automation, power automation, telemedicine operations (surgery), service safety assurance, etc. Typical features of mMTC include: high connection density, small data volume, latency-insensitive service, low cost and long service life of the module.

In the early deployment of NR, complete NR coverage is difficult to obtain, so typical network coverage is wide-area LTE coverage mode and NR island coverage mode. Moreover, a large number of LTE are deployed below 6GHz, and there are few spectrum below 6GHz that can be used for 5G. Therefore, NR must study the spectrum application above 6GHz, while the high frequency band has limited coverage and fast signal fading. At the same time, in order to protect the early investment of mobile operators in LTE, a working mode of tight interworking between LTE and NR is proposed.

### ➢RRC state

5G defines a new Radio Resource Control (RRC) state, that is, the RRC_INACTIVE state, for the purpose of reducing air interface signaling, quickly restoring wireless connections, and quickly restoring data service. This state is different from the RRC_IDLE state and the RRC_ACTIVE state. Where,
1) RRC_IDLE state (called idle state for short): mobility is reselected for the cell selection based on UE, paging is initiated by the Core Network (CN), and the paging area is configured by the CN. There is no UE context and no RRC connection on the base station side.
2) RRC_CONNECTED state (called connected state for short): there is an RRC connection, and there is a UE context on the base station side and the UE side. The network side knows the location of the UE at the specific cell level. Mobility is the mobility controlled by the network side. Unicast data may be transmitted between the UE and the base station.
3) RRC_INACTIVE state (called inactive state for short): mobility is reselected for the cell selection based on UE, there is a connection between CN-NR, there is UE context on a certain base station, and paging is initiated by the RAN, the RAN-based paging area is managed by the RAN, and the network side knows the location of the UE is at the RAN-based paging area level.

### ➢MBMS

3GPP version 6 (Release 6, R6) introduces MBMS. MBMS is a technology that transmits data from one data source to multiple UEs through sharing network resources. This technology can effectively use network resources while providing multimedia service, thereby implementing the broadcast and multicast of multimedia service with high rate (such as 256 kbps).

Due to the low spectral efficiency of MBMS in 3GPP R6, it is not enough to effectively perform and support the operation of telephone type and TV type services. Therefore, in LTE, 3GPP clearly proposes to enhance the support capability for downlink high-speed MBMS services, and determines the design requirements for physical layer and air interface.

3GPP R9 introduces evolved MBMS (eMBMS) into LTE. The eMBMS proposes the concept of Single Frequency Network (SFN), i.e., Multimedia Broadcast multicast service Single Frequency Network (MBSFN). MBSFN uses a unified frequency to send service data in all cells at the same time, but it has to ensure the synchronization between cells. This method may greatly improve the overall signal-to-noise ratio distribution of the cell, and the spectral efficiency will be greatly improved accordingly. The eMBMS implements service broadcast and multicast based on IP multicast protocol.

In LTE or LTE-advanced (LTE-A), MBMS has only broadcast bearer mode and no multicast bearer mode. In addition, the reception of MBMS service is applicable to UE in idle state or connected state.

3GPP R13 introduces the concept of Single Cell Point To Multiploint (SC-PTM), which is MBMS based network architecture.

MBMS introduces new logical channels, including Single Cell-Multicast Control Channel (SC-MCCH) and Single Cell-Multicast Transport Channel (SC-MTCH). SC-MCCH and SC-MTCH are mapped to Downlink-Shared Channel (DL-SCH). Further, DL-SCH is mapped to Physical Downlink Shared Channel (PDSCH). SC-MCCH and SC-MTCH belong to logical channels, DL-SCH belongs to transmission channel and PDSCH belongs to physical channel. SC-MCCH and SC-MTCH do not support Hybrid Automatic Repeat reQuest (HARQ) operations.

MBMS introduces a new System Information Block (SIB) type, i.e., SIB20. Specifically, the configuration information of SC-MCCH is transmitted through SIB20. There is only one SC-MCCH in a cell. The configuration information of SC-MCCH includes the modification period of SC-MCCH, the repetition period of SC-MCCH, and the wireless frame and subframe scheduling SC-MCCH, etc. Further, 1) the boundary of the modification period of SC-MCCH satisfies SFN mod m = 0, where SFN represents the system frame number of the boundary, and m is the modification period of SC-MCCH configured in SIB20 (i.e. sc-mcch-ModificationPeriod). 2) The wireless frame scheduling SC-MCCH satisfies: SFN mod mcch-RepetitionPeriod = mcch-Offset, where SFN represents the system frame number of the wireless frame, mcch-RepetitionPeriod represents the repetition period of SC-MCCH, and mcch-Offset represents the offset of SC-MCCH. 3) The subframe scheduling SC-MCCH is indicated by sc-mcch-Subframe.

SC-MCCH is scheduled through Physical Downlink Control Channel (PDCCH). On the one hand, a new Radio Network Tempory Identity (RNTI), i.e. Single Cell RNTI (SC-RNTI), is introduced to identify the PDCCH for scheduling SC-MCCH (such as SC-MCCH PDCCH). Alternatively, the fixed value of SC-RNTI is FFFC. On the other hand, a new RNTI, i.e., Single Cell Notification RNTI (SC-N-RNTI), is introduced to identify the PDCCH used to indicate the change notification of SC-MCCH (such as notification PDCCH). Alternatively, the fixed value of SC-N-RNTI is FFFB. Further, one of the eight bits of DCI 1C may be used to indicate the change notification. In LTE, the configuration information of SC-PTM is SC-MCCH configured based on SIB20, and then SC-MTCH is configured by SC-MCCH, and SC-MTCH is used to transmit service data.

Specifically, SC-MCCH transmits only one message (i.e., SCPTMConfiguration), and the message is used to configure the configuration information of SC-PTM. The configuration information of SC-PTM includes: Temporary Mobile Group Identity (TMGI), session id, Group RNTI (G-RNTI), Discontinuous Reception (DRX) configuration information, SC-PTM service information of neighbouring cells, etc. It should be noted that SC-PTM in R13 does not support Robust Header Compression (ROHC) function.

The downlink discontinuous reception of SC-PTM is controlled by the following parameters: onDurationTimerSCPTM, drx-InactivityTimerSCPTM, SC-MTCH-SchedulingCycle, and SC-MTCH-SchedulingOffset.

When [(SFN ^{∗} 10) + subframe number] modulo (SC-MTCH-SchedulingCycle) = SC-MTCH-SchedulingOffset is satisfied, the timer onDurationTimerSCPTM is started.

When the downlink PDCCH schedule is received, the timer drx-InactivityTimerSCPTM is started.

The downlink SC-PTM service is received only when the timer onDurationTimerSCPTM or onDurationTimerSCPTM is running.

SC-PTM service continuity adopts the SIB 15 based MBMS service continuity concept, i.e., "SIB15+MBMSInterestIndication" way. The service continuity of UE in idle state is the frequency priority based concept.

In NR, many scenarios need to support the service requirements of multicast and broadcast, such as Internet of vehicles and industrial Internet. Therefore, it is necessary to introduce MBMS into NR. At present, the network side of LTE SC-PTM dynamically schedules the sending and receiving of MBMS service data. For the terminal device in the connected state, when receiving the MBMS service, there is also a requirement for receiving the unicast service, so how to coordinate the reception of unicast service and MBMS service needs to be clarified. Therefore, the following technical solutions of the embodiment of the disclosure are proposed.

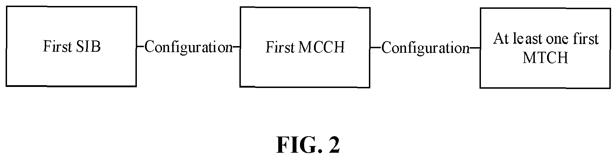

In the technical solutions of the embodiments of the present disclosure, a new SIB (called the first SIB) is defined. Referring to FIG. 2, the first SIB includes the configuration information of the first MCCH. Here, the first MCCH is the control channel of the MBMS service. In other words, the first SIB is used to configure the configuration information of the control channel of NR MBMS. Alternatively, the control channel of NR MBMS may also be called NR MCCH (i.e. the first MCCH).

Further, the first MCCH is used to carry the first signaling. The embodiments of the present disclosure do not limit the name of the first signaling. For example, the first signaling is signaling A, and the first signaling includes the configuration information of at least one first MTCH. Here, the first MTCH is the service channel of the MBMS service (also called a data channel or a transmission channel), and the first MTCH is used to transmit MBMS service data (such as the service data of NR MBMS). In other words, the first MCCH is used to configure the configuration information of the service channel of NR MBMS. Alternatively, the service channel of NR MBMS may also be called NR MTCH (i.e. the first MTCH).

Specifically, the first signaling is used to configure the service channel of NR MBMS, the service information corresponds to the service channel and the scheduling information corresponds to the service channel. Further, alternatively, the service information corresponding to the service channel is identification information identifying the service, such as TMGI and session id, etc. The scheduling information corresponding to the service channel is the RNTI used when the MBMS service data corresponding to the service channel is scheduled, such as G-RNTI, DRX configuration information, etc.

It should be noted that the transmissions of the first MCCH and the first MTCH are both scheduled based on PDCCH. The RNTI used by the PDCCH for scheduling the first MCCH uses the unique identification of the whole network, that is, a fixed value. The RNTI used by the PDCCH for scheduling the first MTCH is configured through the first MCCH.

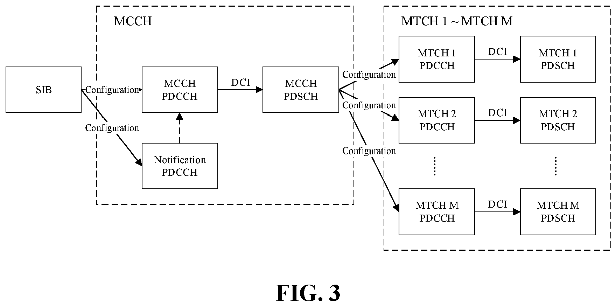

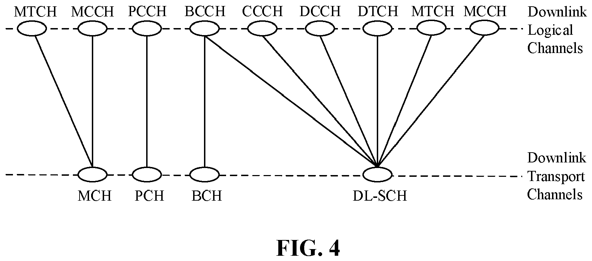

It should be noted that the embodiments of the present disclosure do not limit the names of the first SIB, the first MCCH and the first MTCH. For ease of description, the first SIB may be called SIB for short, the first MCCH may also be called MCCH for short, and the first MTCH may also be called MTCH for short. Referring to Fig. 3, the PDCCH for scheduling MCCH (i.e. MCCH PDCCH) is configured and the PDCCH is noticed through SIB. The PDSCH for transmitting MCCH (i.e. MCCH PDSCH) is scheduled through the DCI carried by MCCH PDCCH. Further, M PDCCHs for scheduling MTCH (i.e. MTCH 1 PDCCH, MTCH 2 PDCCH,..., MTCH M PDCCH) are configured through MCCH. The PDSCH for transmitting MTCH n (i.e. MTCH n PDSCH) is scheduled through the DCI carried by MTCH n PDCCH, and n is an integer greater than or equal to 1 and less than or equal to M. Referring to FIG. 4, MCCH and MTCH are mapped to DL-SCH. Further, DL-SCH is mapped to PDSCH. The MCCH and MATH belong to the logical channels, DL-SCH belongs to transmission channel and PDSCH belongs to the physical channel.

In the technical solutions of the embodiments of the present disclosure, the MBMS service may be a multicast or multicasting service.

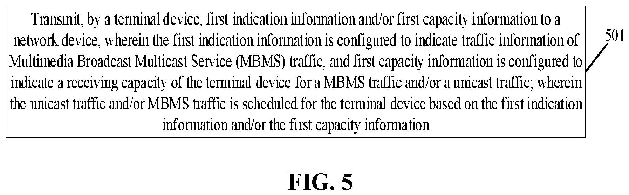

Fig. 5 is the flow diagram of the method for scheduling service provided by the embodiments of the present disclosure. As shown in FIG. 5, the method for scheduling service includes the following steps.

In step 501, the terminal device transmits the first indication information and/or the first capability information to the network device, the first indication information is configured to indicate the service information of the MBMS service, and the first capability information is configured to indicate the receiving capability of the terminal device for a MBMS service and/or an unicast service. The unicast service and/or MBMS service is scheduled for the terminal device based on the first indication information and/or the first capacity information.

In the embodiments of the present disclosure, the terminal device transmits the assistance information to the network device, and the auxiliary information is used to assist the network device to schedule unicast service and/or MBMS service for the terminal device. The assistance information includes at least one of the following: first indication information and first capability information. That is, the terminal device transmits the first indication information and/or the first capability information to the network device. Accordingly, the network device receives the first indication information and/or the first capability information transmitted by the terminal device, and the network device schedules the unicast service and/ or MBMS service for the terminal device based on the first indication information and/or the first capability information. In an alternative embodiment, the network device is a base station, such as GNB

In the embodiments of the present disclosure, the first indication information is configured to indicate the service information of MBMS service, and the first capability information is configured to indicate the receiving capability of the terminal device for the MBMS service and/or unicast service. It should be noted that the assistance information reported by the terminal device to the network device may include the first indication information, or the first capability information, or the first indication information and the first capability information. The specific implementation of the first indication information and the first capability information is described below.

### ➢First indication information

(1) In an alternative embodiment, the first indication information is configured to indicate the service information of the MBMS service that is performed by the terminal device currently.

For example, the terminal device has received the MBMS service before entering the connected state. In that way, the first indication information transmitted by the terminal device to the network device is configured to indicate the service information of the MBMS service that is performed by the terminal device currently.

Further, alternatively, the service information of the MBMS service includes at least one of the following: identification information of the MBMS service and scheduling identification information of the MBMS service. Here, the identification information of MBMS service may include TMGI and/or session id. The scheduling identification information of MBMS service refers to the RNTI of the scheduling information of a service scrambling MBMS service, such as G-RNTI.

(2) In another alternative embodiment, the first indication information is configured to indicate the service information of a MBMS service that the terminal device is prepared to receive.

For example, the terminal device starts receiving the MBMS service after entering the connected state. In that way, the first indication information transmitted by the terminal device to the network device is configured to indicate the service information of a MBMS service that to be received by the terminal device.

Further, alternatively, the service information of the MBMS service includes at least one of the following: identification information of the MBMS service and scheduling identification information of the MBMS service. Here, the identification information of MBMS service may include TMGI and/or session id. The scheduling identification information of MBMS service refers to the RNTI of the scheduling information of a service scrambling MBMS service, such as G-RNTI.

In the embodiments of the present disclosure, the first indication information may be reported in any of the following ways.
(A) The terminal device transmits Radio Resource Control (RRC) dedicated signaling to the network device, the network device receives the RRC dedicated signaling transmitted by the terminal device, and the RRC dedicated signaling carries the first indication information.
   I) The RRC dedicated signaling is an RRCSetupComplete message.
      Specifically, in a case that the terminal device has received the MBMS service before entering the connected state from the idle state, the terminal device transmits an RRCSetupComplete message to the network device when entering the connected state from the idle state, and the RRCSetupComplete message carries the first indication information. Further, the first indication information is configured to indicate the service information of the MBMS service that is performed by the terminal device currently.
   II) The RRC dedicated signaling is an RRCResumeComplete message.
      Specifically, in a case that the terminal device has received the MBMS service before entering the connected state from the inactive state, the terminal device transmits an RRCResumeComplete message to the network device when entering the connected state from the inactive state, and the RRCResumeComplete message carries the first indication information. Further, the first indication information is configured to indicate the service information of the MBMS service that is performed by the terminal device currently.
   III) The RRC dedicated signaling is a UEAssistanceInformation message.
      Specifically, in a case that the terminal device begins to receive the MBMS service after entering the connected state, the terminal device transmits the UEAssistanceInformation message to the network device, and the UEAssistanceInformation message carries the first indication information. Further, the first indication information is configured to indicate the service information of a MBMS service that to be received by the terminal device.
(B) The terminal device transmits the first Media Access Control (MAC) Control Element (CE) to the network device, the network device receives the first MAC CE transmitted by the terminal device, and the first MAC CE carries the first indication information.

In this case, the first indication information is configured to indicate the service information of a MBMS service that is performed by the terminal device currently. Alternatively, the first indication information is configured to indicate the service information of a MBMS service that to be received by the terminal device.

Alternatively, the first MAC CE is associated with a first logical channel identifier (LCID), and the first logical channel identifier is configured to indicate that the first MAC CE is a MAC CE carrying the first indication information. That is, the first MAC CE may be indicated through the first logical channel identifier.

Further, alternatively, the first logical channel identifier is set by the protocol or configured on the network side. For example, the fixed value of the first logical channel identifier may be appointed through the protocol, or the value of the first logical channel identifier may be configured through the network side.

In the embodiments of the present disclosure, the first capability information is configured to indicate at least one of the following: a capability that the terminal device simultaneously receives MBMS service and unicast service; a capability that the terminal device simultaneously receives scheduling information of the MBMS service and scheduling information of the unicast service; a capability that the terminal device simultaneously receives the MBMS service and the unicast service on different BWPs; a capability that the terminal device simultaneously receives the scheduling information of the MBMS service and the scheduling information of the unicast service in different search spaces; and a capability that the terminal device simultaneously receives the MBMS service and the unicast service on a same wireless resource.

Further, alternatively, the same wireless resource is a same symbol, a same time slot, or a same time frequency resource.

For example, the first capability information is configured to indicate that the terminal device can receive the MBMS service and the unicast service simultaneously. Alternatively, the first capability information is configured to indicate that the terminal device cannot receive the MBMS service and the unicast service simultaneously.

For example, the first capability information is configured to indicate that the terminal device can receive the scheduling information of the MBMS service and the scheduling information of the unicast service simultaneously. Alternatively, the first capability information is configured to indicate that the terminal device cannot receive the scheduling information of the MBMS service and the scheduling information of the unicast service simultaneously.

For example, the first capability information is configured to indicate that the terminal device can simultaneously receive the MBMS service and unicast service on different BWPs. For example, the MBMS service may be received on BWP1 and the unicast service may be received on BWP2 simultaneously. Alternatively, the first capability information is configured to indicate that the terminal device cannot simultaneously receive the MBMS service and the unicast service on different BWPs.

For example, the first capability information is configured to indicate that the terminal device can simultaneously receive the scheduling information of the MBMS service and the scheduling information of the unicast service in different search spaces. Alternatively, the first capability information is configured to indicate that the terminal device cannot simultaneously receive the scheduling information of the MBMS service and the scheduling information of the unicast service in different search spaces.

For example, the first capability information is configured to indicate that the terminal device can simultaneously receive the MBMS service and the unicast service on a same wireless resource. Alternatively, the first capability information is configured to indicate that the terminal device cannot simultaneously receive the MBMS service and the unicast service on a same wireless resource.

Further, alternatively, the first capability information is further configured to indicate a capacity that the terminal device simultaneously receives a number of MBMS service data.

For the network side, after receiving the service information of MBMS service and/or the first capability information of the terminal device that are transmitted by the terminal device, when scheduling the unicast service and/or MBMS service of the terminal device, the network device schedules the services according to the capability of the terminal device, so that the conflict between unicast service and multicast service is avoided, and the reception of unicast service does not affect the reception of MBMS service. In other words, the reception of MBMS service does not affect the reception of unicast service. On the other hand, the reception of unicast service and the reception of MBMS service can also meet the capability requirements of terminal device, for example, avoiding the simultaneous occurrence of the reception of unicast service and the reception of MBMS service.

In an alternative embodiment, if the reception of the unicast service is conflict with the reception of the MBMS service (for example, the terminal device is not able to receive the unicast service and the MBMS service simultaneously), the terminal device determines to preferentially receive the MBMS service or the unicast service based on one of the following: an implementation of the terminal device, a configuration of the network device, and a protocol provision.

In an alternative embodiment, if the reception of the scheduling information of the unicast service is conflict with the reception of the scheduling information of the MBMS service (for example, the terminal device cannot receive the scheduling information of the unicast service and the scheduling information of the MBMS service simultaneously), the terminal device determines to preferentially receive the scheduling information of the MBMS service or the scheduling information of the unicast service based on one of the following: an implementation of the terminal device, a configuration of the network device, and a protocol provision.

According to the technical solutions of the embodiments of the present disclosure, the terminal device transmits the assistance information (i.e. the first indication information and/or the first capability information) to the network device to assist the network device in scheduling unicast service, so that the NR system supports the coordinated reception of the MBMS service and the unicast service, thereby the reception of unicast service do not conflict with the reception of MBMS service, or the reception of scheduling information of unicast service do not conflict with the reception of scheduling information of MBMS service, and the capability requirement of terminal device is satisfied.

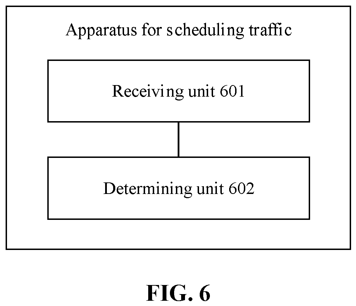

FIG. 6 is the first structural composition diagram of the apparatus for scheduling service provided by the embodiments of the present disclosure, which is applicable for the terminal device. The apparatus includes a transmitting unit 601.

The transmitting unit 601 is configured to transmit first indication information and/or first capacity information to a network device. The first indication information is configured to indicate service information of MBMS service, and first capacity information is configured to indicate a receiving capacity of the terminal device for a MBMS service and/or a unicast service.

The unicast service and/or MBMS service is scheduled for the terminal device based on the first indication information and/or the first capacity information.

In an alternative embodiment, the first indication information is configured to indicate service information of a MBMS service that is performed by the terminal device presently.

Alternatively, the first indication information is configured to indicate service information of a MBMS service that the terminal device is prepared to receive.

In an alternative embodiment, the transmitting unit 601 is configured to transmit RRC dedicated signaling to the network device, the RRC dedicated signaling carrying the first indication information.

In an alternative embodiment, the RRC dedicated signaling is an RRCSetupComplete message.

In an alternative embodiment, in a case that the terminal device has received the MBMS service before entering a connected state from an idle state, the transmitting unit is configured to transmit the RRCSetupComplete message to the network device when the terminal device enters the connected state from the idle state. The RRCSetupComplete message carries the first indication information.

In an alternative embodiment, the RRC dedicated signaling is an RRCResumeComplete message.

In an alternative embodiment, when in a case that the terminal device has received the MBMS service before entering a connected state from an inactive state, the transmitting unit is configured to transmit the RRCResumeComplete message to the network device when the terminal device enters the connected state from the inactive state. The RRCResumeComplete message carries the first indication information.

In an alternative embodiment, the RRC dedicated signaling is an UEAssistanceInformation message.

In an alternative embodiment, in a case that the terminal device begins to receive the MBMS service after entering a connected state, the transmitting unit is configured to transmit the UEAssistanceInformation message to the network device. The UEAssistanceInformation message carries the first indication information

In an alternative embodiment, the transmitting unit is configured to transmit a first MAC CE to the network device. The first MAC CE carries the first indication information.

In an alternative embodiment, the first MAC CE is associated with a first logical channel identifier, and the first logical channel identifier is configured to indicate that the first MAC CE is a MAC CE carrying the first indication information.

In an alternative embodiment, the first logical channel identifier is set by the protocol or configured by network side.

In an alternative embodiment, the first capability information is configured to indicate at least one of the following: a capability that the terminal device simultaneously receives MBMS service and unicast service; a capability that the terminal device simultaneously receives scheduling information of the MBMS service and scheduling information of the unicast service; a capability that the terminal device simultaneously receives the MBMS service and the unicast service on different BWPs; a capability that the terminal device simultaneously receives the scheduling information of the MBMS service and the scheduling information of the unicast service in different search spaces; and a capability that the terminal device simultaneously receives the MBMS service and the unicast service on a same wireless resource.

In an alternative embodiment, the same wireless resource is a same symbol, a same time slot, or a same time frequency resource.

In an alternative embodiment, the first capability information is further configured to indicate a capacity that the terminal device simultaneously receives a number of MBMS service data.

In an alternative embodiment, the service information of the MBMS service comprises at least one of the following: identification information of the MBMS service and scheduling identification information of the MBMS service.

In an alternative embodiment, the apparatus further includes a determining unit 602.

The determining unit is configured to: in response to reception of the unicast service being conflicted with reception of the MBMS service, determine to preferentially receive the MBMS service or the unicast service based on one of the following: an implementation of the terminal device, a configuration of the network device, and a protocol provision.

In an alternative embodiment, the apparatus further includes a determining unit 602.

The determining unit is configured to: in response to the reception of scheduling information of the unicast service being conflicted with the reception of scheduling information of the MBMS service, determine to preferentially receive the scheduling information of the MBMS service or the scheduling information of the unicast service based on one of the following: an implementation of the terminal device, a configuration of the network device, and a protocol provision.

Those skilled in the art should understand that the relevant description of the above apparatus for scheduling service of the embodiments of the present disclosure may be understood with reference to the relevant description of the method for scheduling service of the embodiments of the present disclosure.

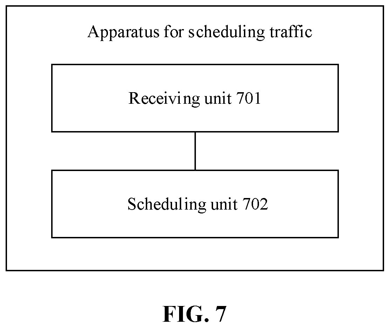

FIG. 7 is the second structural composition diagram of the apparatus for scheduling service provided by the embodiments of the present disclosure, which is applicable for the network device. The apparatus includes a receiving unit 701 and a scheduling unit 702.

The receiving unit is configured to receive first indication information and/or first capacity information from a terminal device. The first indication information is configured to indicate service information of Multimedia Broadcast Multicast Service (MBMS) service, and first capacity information is configured to indicate a receiving capacity of the terminal device for a MBMS service and/or a unicast service.

The scheduling unit is configured to schedule the unicast service and/or MBMS service for the terminal device based on the first indication information and/or the first capacity information.

In an alternative embodiment, the first indication information is configured to indicate service information of a MBMS service that is performed by the terminal device presently.

Alternatively, the first indication information is configured to indicate service information of a MBMS service that the terminal device is prepared to receive.

In an alternative embodiment, the receiving unit 701 is configured to receive a Radio Resource Control (RRC) dedicated signaling from the terminal device. The RRC dedicated signaling carries the first indication information.

In an alternative embodiment, the RRC dedicated signaling is an RRCSetupComplete message.

In an alternative embodiment, the RRC dedicated signaling is an RRCResumeComplete message.

In an alternative embodiment, the RRC dedicated signaling is an UEAssistanceInformation message.

In an alternative embodiment, the receiving unit 701 is configured to receive a first Media Access Control (MAC) Control Element (CE) from the terminal device. The first MAC CE carries the first indication information.

In an alternative embodiment, the first MAC CE is associated with a first logical channel identifier, and the first logical channel identifier is configured to indicate that the first MAC CE is a MAC CE carrying the first indication information.

In an alternative embodiment, the first logical channel identifier is set by the protocol or configured by network side.

In an alternative embodiment, the first capability information is configured to indicate at least one of the following: a capability that the terminal device simultaneously receives MBMS service and unicast service; a capability that the terminal device simultaneously receives scheduling information of the MBMS service and scheduling information of the unicast service; a capability that the terminal device simultaneously receives the MBMS service and the unicast service on different BWPs; a capability that the terminal device simultaneously receives the scheduling information of the MBMS service and the scheduling information of the unicast service in different search spaces; and a capability that the terminal device simultaneously receives the MBMS service and the unicast service on a same wireless resource.

In an alternative embodiment, the same wireless resource is a same symbol, a same time slot, or a same time frequency resource.

In an alternative embodiment, the first capability information is further configured to indicate a capacity that the terminal device simultaneously receives a number of MBMS service data.

In an alternative embodiment, the service information of the MBMS service comprises at least one of the following: identification information of the MBMS service and scheduling identification information of the MBMS service.

Those skilled in the art should understand that the relevant description of the above apparatus for scheduling service of the embodiments of the present disclosure may be understood with reference to the relevant description of the method for scheduling service of the embodiments of the present disclosure.

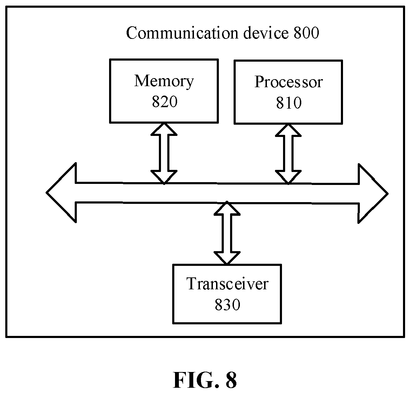

FIG. 8 is a schematic structure diagram of a communication device 800 provided by the embodiments of the present disclosure. The communication device may be a terminal device or a network device. The communication device 800 shown in FIG. 8 includes a processor 810, and the processor 810 may call and execute the computer program stored in the memory to implement the methods in the embodiments the present disclosure.

Alternatively, as shown in FIG. 8, the communication device 800 may also include a memory 820. The processor 810 may call and execute the computer program stored in the memory 820 to implement the methods in the embodiments the present disclosure.

The memory 820 may be a separate device independent of the processor 810 or may be integrated into the processor 810.

Alternatively, as shown in FIG. 8, the communication device 800 may also include a transceiver 830, and the processor 810 may control the transceiver 830 to communicate with other devices. Specifically, the transceiver 830 may transmit information or data to other devices or receive information or data transmitted by other devices.

The transceiver 830 may include a transmitter and a receiver. The transceiver 830 may further include antennas, and the number of antennas may be one or more.

Alternatively, the communication device 800 may be specifically the network device of the embodiments of the present disclosure, and the communication device 800 may implement the corresponding processes implemented by the network device in various methods of the embodiments of the present disclosure. For simplicity, it will not be repeated here.

Alternatively, the communication device 800 may be a mobile terminal/terminal device of the embodiments of the present disclosure, and the communication device 800 may implement the corresponding processes implemented by the mobile terminal/terminal device in various methods of the embodiments of the present disclosure. For simplicity, it will not be repeated here.

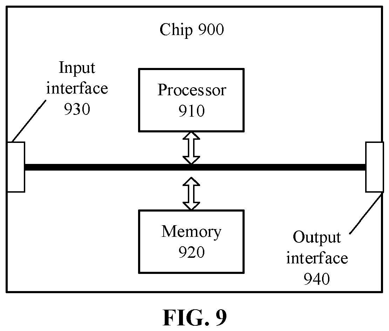

FIG. 9 is a schematic structural diagram of a chip according to the embodiments of the present disclosure. The chip 900 shown in FIG. 9 includes processor 910, and processor 910 may call and execute computer programs stored in the memory to implement the method in embodiments of the present disclosure.

Alternatively, as shown in FIG. 9, the chip 900 may also include a memory 920. The processor 910 may call and execute the computer programs stored in the memory 920 to implement the method in embodiments of the present disclosure.

The memory 920 may be a separate device independent of the processor 910 or may be integrated into the processor 910.

Alternatively, the chip 900 may also include an input interface 930. The processor 910 may control the input interface 930 to communicate with other devices or chips. Specifically, the input interface 930 may obtain information or data transmitted by other devices or chips.

Alternatively, the chip 900 may also include an output interface 940. The processor 910 may control the output interface 940 to communicate with other devices or chips. Specifically, the output interface 940 may output information or data to other devices or chips.

Alternatively, the chip may be applicable for the network device in the embodiments of the present disclosure, and the chip may implement the corresponding processes implemented by the network device in various methods of the embodiments of the present disclosure. For simplicity, it will not be repeated here.

Alternatively, the chip may be applicable for the mobile terminal/terminal device in the embodiments of the present disclosure, and the chip may implement the corresponding processes implemented by the mobile terminal/terminal device in various methods of the embodiments of the present disclosure. For simplicity, it will not be repeated here.

It should be understood that the chip mentioned in the embodiments of the present disclosure may also be referred to as system level chip, system chip, chip system or system on chip.

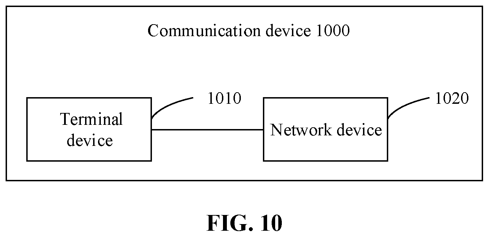

FIG. 10 is a schematic block diagram of a communication system 1000 provided by the embodiments of the present disclosure. As shown in FIG. 10, the communication system 1000 includes a terminal device 1010 and a network device 1020.

The terminal device 1010 may be used to implement the corresponding functions implemented by the terminal device in the above method, and the network device 1020 may be used to implement the corresponding functions implemented by the network device in the above method. For simplicity, it will not be repeated here.

It should be understood that the processor of the embodiments of the present disclosure may be an integrated circuit chip with signal processing capability. In the implementation process, each step of the above method embodiments may be completed by the integrated logic circuit of hardware or instructions in the form of software in the processor. The above processor may be a general-purpose processor, a Digital Signal Processor (DSP), an Application Specific Integrated Circuit (ASIC), a Field Programmable Gate Array (FPGA) or other programmable logic devices, discrete gate or transistor logic devices, and discrete hardware components. The methods, steps and logical block diagrams disclosed in the embodiments of the present disclosure may be implemented or executed. The general-purpose processor may be a microprocessor or the processor may also be any conventional processor, etc. The steps of the method disclosed in combination with the embodiments of the present disclosure may be directly reflected in the execution of the hardware decoding processor, or the combination of hardware and software modules in the decoding processor. The software module may be located in Random access memory (RAM), flash memory, read-only memory, programmable read-only memory or electrically erasable programmable memory, register and other mature storage medium in the art. The storage medium is located in the memory, and the processor reads the information in the memory and completes the steps of the above methods in combination with its hardware.

It can be understood that the memory in the embodiment of the present disclosure may be volatile memory or nonvolatile memory, or may include both volatile and nonvolatile memory. The nonvolatile memory may be Read-Only Memory (ROM), Programmable ROM (PROM), Erasable PROM (EPROM), Electrically EPROM (EEPROM) or flash memory. The volatile memory may be Random Access Memory (RAM), which is used as an external cache. By way of example but not limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM) and Direct Rambus RAM (DR RAM). It should be noted that the memory of the systems and methods described herein is intended to include, but is not limited to, these and any other suitable type of memory.

It should be understood that the above memory is exemplary but not limitation. For example, the memory in the embodiments of the present disclosure may also be SRAM, DRAM, SDRAM, DDR SDRAM, ESDRAM, SLDRAM, DR RAM, etc. That is, the memory in the embodiments of the present disclosure is intended to include but not limited to these and any other suitable types of memory.

The embodiment of the present disclosure also provides a computer readable storage medium for storing computer programs.

Alternatively, the computer-readable storage medium may be applicable for the network device in the embodiments of the present disclosure, and the computer program enables the computer to perform the corresponding processes implemented by the network device in various methods of the embodiments of the present disclosure. For simplicity, it will not be repeated here.

Alternatively, the computer readable storage medium may be applicable for the mobile terminal/terminal device in the embodiments of the present disclosure, and the computer program enables the computer to perform the corresponding processes implemented by the mobile terminal/terminal device in the various methods of the embodiment of the present disclosure. For simplicity, it will not be repeated here.

The embodiments of the present disclosure also provide a computer program product, including computer program instructions.

Alternatively, the computer program product may be applicable for the network device in the embodiments of the present disclosure, and the computer program instructions enable the computer to perform the corresponding processes implemented by the network device in various methods of the embodiments of the present disclosure. For simplicity, it will not be repeated here.

Alternatively, the computer program product may be applicable for the mobile terminal/terminal device in the embodiments of the present disclosure, and the computer program instructions enable the computer to perform the corresponding processes implemented by the mobile terminal/terminal device in the various methods of the embodiments of the present disclosure. For simplicity, it will not be repeated here.

The embodiments of the present disclosure also provide a computer program.

Alternatively, the computer program may be applicable for the network device in the embodiments of the present disclosure. When the computer program is executed on the computer, the computer performs the corresponding processes implemented by the network device in various methods of the embodiments of the present disclosure. For simplicity, it will not be repeated here.

Alternatively, the computer program may be applicable for the mobile terminal/terminal device in the embodiments of the present disclosure. When the computer program is executed on the computer, the computer performs the corresponding processes implemented by the mobile terminal/terminal device in various methods of the embodiments of the present disclosure. For simplicity, it will not be repeated here.

Those skilled in the art can realize that the units and algorithm steps of each embodiment described in combination with the embodiments disclosed herein may be implemented by electronic hardware, or a combination of computer software and electronic hardware. Whether these functions are performed in hardware or software depends on the specific application and design constraints of the technical solutions. Professional technicians may use different methods to implement the described functions for each specific application, but such implementation should not be considered to be beyond the scope of the present disclosure.

Those skilled in the art can clearly understand that for the convenience and simplicity of description, the specific working process of the above described systems, devices and units may refer to the corresponding process in the above method embodiments, which will not be repeated here.

In several embodiments provided in the present disclosure, it should be understood that the disclosed systems, apparatus and methods may be implemented in other ways. For example, the apparatus embodiments described above are only schematic. For example, the division of the units is only a logical function division, and there can be another division mode in actual implementation. For example, multiple units or components may be combined or integrated into another system, or some features may be ignored or not executed. On the other hand, the mutual coupling or direct coupling or communication connection shown or discussed may be indirect coupling or communication connection through some interfaces, apparatus or units, and may be electrical, mechanical or other forms.

The unit described as a separate component may or may not be physically separated, and the component displayed as a unit may or may not be a physical unit, that is, it may be located in one place or distributed to a plurality of network units. Some or all of the units may be selected according to the actual needs to implement the purpose of the embodiments.

In addition, each functional unit in each embodiment of the present disclosure may be integrated into one processing unit, each unit may exist separately, or two or more units may be integrated into one unit.

If the functions are implemented in the form of software functional units and sold or used as independent products, they may be stored in a computer readable storage medium. Based on this understanding, the technical solutions of the present disclosure essentially or the part that contributes to the prior art or the part of the technical solution may be embodied in the form of a software product, which is stored in a storage medium, It includes several instructions to enable a computer device (which can be a personal computer, server, network device, etc.) to perform all or part of the steps of the method described in various embodiments of the present disclosure. The aforementioned storage medium include: USB flash disk, mobile hard disk, ROM, RAM, magnetic disc or optical disc and other medium that can store program codes.

The above is only the specific embodiments of the present disclosure, but the scope of protection of the present disclosure is not limited to this. The changes or replacements within the technical scope disclosed in the present disclosure easily performed by any technical personnel familiar with the technical field shall be covered by the protection scope of the present disclosure. Therefore, the protection scope of the present disclosure shall be subject to the protection scope of the claims.

## Claims

1. A method for scheduling service, comprising:
transmitting, by a terminal device, first indication information and/or first capacity information to a network device, wherein the first indication information is configured to indicate service information of Multimedia Broadcast Multicast Service (MBMS) service, and first capacity information is configured to indicate a receiving capacity of the terminal device for a MBMS service and/or an unicast service;
wherein the unicast service and/or MBMS service is scheduled for the terminal device based on the first indication information and/or the first capacity information.

2. The method of claim 1, wherein
the first indication information is configured to indicate service information of a MBMS service that is performed by the terminal device presently; or
the first indication information is configured to indicate service information of a MBMS service that the terminal device is prepared to receive.

3. The method of claim 1 or 2, wherein transmitting, by the terminal device, the first indication information to the network device comprising:
transmitting, by the terminal device, Radio Resource Control (RRC) dedicated signaling to the network device, the RRC dedicated signaling carrying the first indication information.

4. The method of claim 3, wherein the RRC dedicated signaling is an RRCSetupComplete message.

5. The method of claim 4, wherein in a case that the terminal device has received the MBMS service before entering a connected state from an idle state,
transmitting, by the terminal device, the RRC dedicated signaling to the network device, the RRC dedicated signaling carrying the first indication information, comprising:
transmitting, by the terminal device, the RRCSetupComplete message to the network device when entering the connected state from the idle state, wherein the RRC SetupComplete message carries the first indication information.

6. The method of claim 3, wherein the RRC dedicated signaling is an RRCResumeComplete message.

7. The method of claim 6, wherein in a case that the terminal device has received the MBMS service before entering a connected state from an inactive state,
transmitting, by the terminal device, the RRC dedicated signaling to the network device, the RRC dedicated signaling carrying the first indication information, comprising:
transmitting, by the terminal device, the RRCResumeComplete message to the network device when entering the connected state from the inactive state, wherein the RRCResumeComplete message carries the first indication information.

8. The method of claim 3, wherein the RRC dedicated signaling is an UEAssistanceInformation message.

9. The method of claim 8, wherein in a case that the terminal device begins to receive the MBMS service after entering a connected state,
transmitting, by the terminal device, the RRC dedicated signaling to the network device, the RRC dedicated signaling carrying the first indication information, comprising:
transmitting, by the terminal device, the UEAssistanceInformation message to the network device, wherein the UEAssistanceInformation message carries the first indication information.

10. The method of claim 1 or 2, wherein transmitting, by the terminal device, the first indication information to the network device comprising:
transmitting, by the terminal device, a first Media Access Control (MAC) Control Element (CE) to the network device, wherein the first MAC CE carries the first indication information.

11. The method of claim 10, wherein the first MAC CE is associated with a first logical channel identifier, and the first logical channel identifier is configured to indicate that the first MAC CE is a MAC CE carrying the first indication information.

12. The method of claim 11, wherein the first logical channel identifier is set by the protocol or configured by network side.

13. The method of any one of claims 1-12, wherein the first capability information is configured to indicate at least one of the following:
a capability that the terminal device simultaneously receives MBMS service and unicast service;
a capability that the terminal device simultaneously receives scheduling information of the MBMS service and scheduling information of the unicast service;
a capability that the terminal device simultaneously receives the MBMS service and the unicast service on different BWPs;
a capability that the terminal device simultaneously receives the scheduling information of the MBMS service and the scheduling information of the unicast service in different search spaces; and
a capability that the terminal device simultaneously receives the MBMS service and the unicast service on a same wireless resource.

14. The method of claim 13, wherein the same wireless resource is a same symbol, a same time slot, or a same time frequency resource.

15. The method of any one of claims 1-14, wherein the first capability information is further configured to indicate a capacity that the terminal device simultaneously receives a number of MBMS service data.

16. The method of any one of claims 1-15, wherein the service information of the MBMS service comprises at least one of the following:
identification information of the MBMS service and scheduling identification information of the MBMS service.

17. The method of any one of claims 1-16, wherein in response to reception of the unicast service and reception of the MBMS service conflicting,
determining, by the terminal device, to preferentially receive the MBMS service or the unicast service based on one of the following: an implementation of the terminal device, a configuration of the network device, and a protocol provision.

18. The method of any one of claims 1-16, wherein in response to the reception of scheduling information of the unicast service and the reception of scheduling information of the MBMS service conflicting,
determining, by the terminal device, to preferentially receive the scheduling information of the MBMS service or the scheduling information of the unicast service based on one of the following: an implementation of the terminal device, a configuration of the network device, and a protocol provision.

19. A method for scheduling service, comprising:
receiving, by a network device, first indication information and/or first capacity information from a terminal device, wherein the first indication information is configured to indicate service information of Multimedia Broadcast Multicast Service (MBMS) service, and first capacity information is configured to indicate a receiving capacity of the terminal device for a MBMS service and/or a unicast service;
scheduling, by the network device, the unicast service and/or MBMS service for the terminal device based on the first indication information and/or the first capacity information.

20. The method of claim 19, wherein
the first indication information is configured to indicate service information of a MBMS service that is performed by the terminal device presently; or
the first indication information is configured to indicate service information of a MBMS service that the terminal device is prepared to receive.

21. The method of claim 19 or 20, wherein receiving, by the network device, the first indication information from a terminal device comprising:
receiving, by the network device, Radio Resource Control (RRC) dedicated signaling from the terminal device, the RRC dedicated signaling carrying the first indication information.

22. The method of claim 21, wherein the RRC dedicated signaling is an RRCSetupComplete message.

23. The method of claim 21, wherein the RRC dedicated signaling is an RRCResumeComplete message.

24. The method of claim 21, wherein the RRC dedicated signaling is an UEAssistanceInformation message.

25. The method of claim 19 or 20, wherein receiving, by the network device, the first indication information from the terminal device comprising:
receiving, by the network device, a first Media Access Control (MAC) Control Element (CE) from the terminal device, wherein the first MAC CE carries the first indication information.

26. The method of claim 25, wherein the first MAC CE is associated with a first logical channel identifier, and the first logical channel identifier is configured to indicate that the first MAC CE is a MAC CE carrying the first indication information.

27. The method of claim 26, wherein the first logical channel identifier is set by the protocol or configured by network side.

28. The method of any one of claims 19-27, wherein the first capability information is configured to indicate at least one of the following:
a capability that the terminal device simultaneously receives MBMS service and unicast service;
a capability that the terminal device simultaneously receives scheduling information of the MBMS service and scheduling information of the unicast service;
a capability of that terminal device simultaneously receives the MBMS service and the unicast service on different BWPs;
a capability that the terminal device simultaneously receives the scheduling information of the MBMS service and the scheduling information of the unicast service in different search spaces; and
a capability that the terminal device simultaneously receives the MBMS service and the unicast service on a same wireless resource.

29. The method of Claim 28, wherein, the same wireless resource is a same symbol, a same time slot, or a same time frequency resource.

30. The method of any one of claims 19-29, wherein the first capability information is further configured to indicate a capacity that the terminal device simultaneously receives a number of MBMS service data.

31. The method of any one of claims 19-30, wherein the service information of the MBMS service comprises at least one of the following:
identification information of the MBMS service and scheduling identification information of the MBMS service.

32. An apparatus for scheduling service, comprising:
a transmitting unit, is configured to transmit first indication information and/or first capacity information to a network device, wherein the first indication information is configured to indicate service information of Multimedia Broadcast Multicast Service (MBMS) service, and first capacity information is configured to indicate a receiving capacity of the terminal device for a MBMS service and/or a unicast service;
wherein the unicast service and/or MBMS service is scheduled for the terminal device based on the first indication information and/or the first capacity information.

33. The apparatus of claim 32, wherein
the first indication information is configured to indicate service information of a MBMS service that is performed by the terminal device presently; or
the first indication information is configured to indicate service information of a MBMS service that the terminal device is prepared to receive.

34. The apparatus of claim 32 or 33, wherein the transmitting unit is configured to transmit Radio Resource Control (RRC) dedicated signaling to the network device, the RRC dedicated signaling carrying the first indication information.

35. The apparatus of claim 34, wherein the RRC dedicated signaling is an RRCSetupComplete message.

36. The apparatus of claim 35, wherein in a case that the terminal device has received the MBMS service before entering a connected state from an idle state,
the transmitting unit is configured to transmit the RRCSetupComplete message to the network device when the terminal device enters the connected state from the idle state, wherein the RRCSetupComplete message carries the first indication information.

37. The apparatus of claim 34, wherein the RRC dedicated signaling is an RRCResumeComplete message.

38. The apparatus of claim 37, wherein in a case that the terminal device has received the MBMS service before entering a connected state from an inactive state,
the transmitting unit is configured to transmit the RRCResumeComplete message to the network device when the terminal device enters the connected state from the inactive state, wherein the RRCResumeComplete message carries the first indication information.

39. The apparatus of claim 34, wherein the RRC dedicated signaling is an UEAssistanceInformation message.

40. The apparatus of claim 39, wherein in a case that the terminal device begins to receive the MBMS service after entering a connected state,
the transmitting unit is configured to transmit the UEAssistanceInformation message to the network device, wherein the UEAssistanceInformation message carries the first indication information.

41. The apparatus of claim 32 or 33, wherein the transmitting unit is configured to transmit a first Media Access Control (MAC) Control Element (CE) to the network device, wherein the first MAC CE carries the first indication information.

42. The apparatus of claim 41, wherein the first MAC CE is associated with a first logical channel identifier, and the first logical channel identifier is configured to indicate that the first MAC CE is a MAC CE carrying the first indication information.

43. The apparatus of claim 42, wherein the first logical channel identifier is set by the protocol or configured by network side.

44. The apparatus of any one of claims 32-43, wherein the first capability information is configured to indicate at least one of the following:
a capability that the terminal device simultaneously receives MBMS service and unicast service;
a capability that the terminal device simultaneously receives scheduling information of the MBMS service and scheduling information of the unicast service;
a capability that the terminal device simultaneously receives the MBMS service and the unicast service on different BWPs;
a capability that the terminal device simultaneously receives the scheduling information of the MBMS service and the scheduling information of the unicast service in different search spaces; and
a capability that the terminal device simultaneously receives the MBMS service and the unicast service on a same wireless resource.

45. The apparatus of Claim 44, wherein, the same wireless resource is a same symbol, a same time slot, or a same time frequency resource.

46. The apparatus of any one of claims 32-45, wherein the first capability information is further configured to indicate a capacity that the terminal device simultaneously receives a number of MBMS service data.

47. The apparatus of any one of claims 32-46, wherein the service information of the MBMS service comprises at least one of the following:
identification information of the MBMS service and scheduling identification information of the MBMS service.

48. The apparatus of any one of claims 32-47, further comprising:
a determining unit, configured to: in response to reception of the unicast service being conflicted with reception of the MBMS service, determine to preferentially receive the MBMS service or the unicast service based on one of the following: an implementation of the terminal device, a configuration of the network device, and a protocol provision.

49. The apparatus of any one of claims 32-47, further comprising:
a determining unit, configured to: in response to the reception of scheduling information of the unicast service being conflicted with the reception of scheduling information of the MBMS service, determine to preferentially receive the scheduling information of the MBMS service or the scheduling information of the unicast service based on one of the following: an implementation of the terminal device, a configuration of the network device, and a protocol provision.

50. An apparatus for scheduling service, comprising:
a receiving unit, configured to receive first indication information and/or first capacity information from a terminal device, wherein the first indication information is configured to indicate service information of Multimedia Broadcast Multicast Service (MBMS) service, and first capacity information is configured to indicate a receiving capacity of the terminal device for a MBMS service and/or a unicast service; and
a scheduling unit, configured to schedule the unicast service and/or MBMS service for the terminal device based on the first indication information and/or the first capacity information.

51. The apparatus of claim 50, wherein
the first indication information is configured to indicate service information of a MBMS service that is performed by the terminal device presently; or
the first indication information is configured to indicate service information of a MBMS service that the terminal device is prepared to receive.

52. The apparatus of claim 50 or 51, wherein the receiving unit is configured to receive a Radio Resource Control (RRC) dedicated signaling from the terminal device, wherein the RRC dedicated signaling carries the first indication information.

53. The apparatus of claim 52, wherein the RRC dedicated signaling is an RRCSetupComplete message.

54. The apparatus of claim 52, wherein the RRC dedicated signaling is an RRCResumeComplete message.

55. The apparatus of claim 52, wherein the RRC dedicated signaling is an UEAssistanceInformation message.

56. The apparatus of claim 50 or 51, wherein the receiving unit is configured to receive a first Media Access Control (MAC) Control Element (CE) from the terminal device, wherein the first MAC CE carries the first indication information.

57. The apparatus of claim 56, wherein the first MAC CE is associated with a first logical channel identifier, and the first logical channel identifier is configured to indicate that the first MAC CE is a MAC CE carrying the first indication information.

58. The apparatus of claim 57, wherein the first logical channel identifier is set by the protocol or configured by network side.

59. The apparatus of any one of claims 50-58, wherein the first capability information is configured to indicate at least one of the following:
a capability that the terminal device simultaneously receives MBMS service and unicast service;
a capability that the terminal device simultaneously receives scheduling information of the MBMS service and scheduling information of the unicast service;
a capability that the terminal device simultaneously receives the MBMS service and the unicast service on different BWPs;
a capability that the terminal device simultaneously receives the scheduling information of the MBMS service and the scheduling information of the unicast service in different search spaces; and
a capability that the terminal device simultaneously receives the MBMS service and the unicast service on a same wireless resource.

60. The apparatus of Claim 59, wherein, the same wireless resource is a same symbol, a same time slot, or a same time frequency resource.

61. The apparatus of any one of claims 50-60, wherein the first capability information is further configured to indicate a capacity that the terminal device simultaneously receives a number of MBMS service data.

62. The apparatus of any one of claims 50-61, wherein the service information of the MBMS service comprises at least one of the following:
identification information of the MBMS service and scheduling identification information of the MBMS service.

63. A terminal device, comprising: a processor and a memory, wherein the memory is configured to store a computer program, and the processor is configured to call and execute the computer program stored in the memory to implement the method of any one of claims 1-18.

64. A network device, comprising: a processor and a memory, wherein the memory is configured to store a computer program, and the processor is configured to call and execute the computer program stored in the memory to implement the method of any one of claims 19-31.

65. A chip, comprising: a processor configured to call and execute a computer program in a memory to enable a device on which the chip is mounted to perform the method of any one of claims 1-18.

66. A chip, comprising: a processor configured to call and execute a computer program in a memory to enable a device on which the chip is mounted to perform the method of any one of claims 19-31.

67. A computer readable storage medium for storing a computer program, wherein the computer program enables a computer to perform the method of any one of claims 1-18.

68. A computer readable storage medium for storing a computer program, wherein the computer program enables a computer to perform the method of any one of claims 19-31.

69. A computer program product comprising computer program instructions, wherein the computer program instructions enable a computer to perform the method of any one of claims 1-18.

70. A computer program product comprising computer program instructions, wherein the computer program instructions enable a computer to perform the method of any one of claims 19-31.

71. A computer program for enabling a computer to perform the method according to any one of claims 1-18.

72. A computer program for enabling a computer to perform the method according to any one of claims 19-31.
